# EUROPÄISCHE PATENTANMELDUNG

(11) **EP 0 761 522 A1**
(43) Veröffentlichungstag der Anmeldung: **12.03.1997**
(21) Anmeldenummer: 96111490.7
(22) Anmeldetag: 17.07.1996
(51) Int. Cl.: B61L 25/02, G01C 21/20, G01S 5/14

(54) **Verfahren und Vorrichtung zur Bestimmung der Position wenigstens einer Stelle eines spurgeführten Fahrzeugs und deren Verwendung**

(30) Priorität: 30.08.1995 DE 19532104
(71) Anmelder: DAIMLER-BENZ AKTIENGESELLSCHAFT, 70567 Stuttgart (DE)
(72) Erfinder: Möhlenbrink, (DE); Möhrke, Gerd, Dr., D-12209 Berlin (DE); Boese, Peter, Dr., 88718 Daisendorf (DE)

(57) **Zusammenfassung**

Verfahren und Vorrichtung zur Bestimmung der Position eines sich auf einer vorgegebenen Spur bewegenden Fahrzeugs unter Verwendung eines Map-Matching-Verfahrens.

Erfindungsgemäß wird vorgesehen, wenigstens drei Arten von Positionsmeßdaten in Form von Objektortdaten, Weglängendaten und Streckenverlaufsdaten zu gewinnen und für jede Art von Meßdaten mittels einer Rechnereinheit eine Datenkorrelation mit einer jeweils zugehörigen, abgelegten Solldatenmenge zu Ermittlung jeweiliger Positionsresultate vorzunehmen, die dann in einem m-von-n-Entscheidungsfindungsverfahren, bei dem eine vorgegebene Anzahl m der n ermittelten Positionsresultate Berücksichtigung findet, ausgewertet wird. Dies erlaubt bei vergleichsweise geringem Aufwand eine zuverlässige und fehlertolerante Fahrzeugpositionsbestimmung.

## Beschreibung

Die Erfindung bezieht sich auf ein Verfahren und eine Vorrichtung zur Bestimmung der Position wenigstens einer Stelleeines sich längs einer vorgegebenen Spur bewegenden Fahrzeugs sowie auf deren Verwendung zur Abstandsermittlung verschiedener Fahrzeugstellen.. Ein wichtiger Anwendungsfall betrifft die genaue Positionsbestimmung und Zuglängenkontrolle von Eisenbahnfahrzeugen.

Hinsichtlich der Positionsbestimmung von gleisgeführten Fahrzeugen ist es bekannt, die Anwesenheit eines Zuges in einem jeweiligen Gleisabschnitt durch zugeordnete Gleisstromkreise oder elektrische Kontakte in Form elektronischer Schienenkontakte bzw. Achszähler zu detektieren. Weitergehend sind Systeme zur punktförmigen Zugbeeinflussung, siehe die Patentschrift DE 31 06 629 C2, und zur linienförmigen Zugbeeinflussung, siehe die Offenlegungsschrift EP 0 593 910 A1, bekannt, die auch für die Fahrzeugortung genutzt werden können. Ein solches System mit Linienzugbeeinflussung, bei dem zur Positionsbestimmung unabhängig voneinander Positionsmeßdaten durch Erfassen von entlang dem Spur vorhandenen Linienleiterkabeln mit Kreuzungsstellen einerseits und durch Erfassen der zurückgelegten Wegstrecke mittels eines Wegmeßrades andererseits gewonnen und die gewonnenen Daten miteinander verglichen werden, ist in dem Zeitschriftenaufsatz R. R. Roßberg, Linienzugbeeinflussung, Eisenbahntechnische Praxis 1967, S. 2 bis 6 beschrieben. In der Patentschrift US 5.129.605 ist ein System zur Positionsbestimmung von Eisenbahnzügen beschrieben, bei dem vorzugsweise Daten eines satellitenbasierten Systems in Form des sogenannten GPS (Global Positioning System) und in Zeiträumen ohne GPS-Daten Meßdaten eines Radtachometers oder von streckenseitig plazierten Wegemarken zur Positionsbestimmung unter Zuhilfenahme spezieller Filteralgorithmen und Ausgleichsrechungen verwendet werden.

In der Veröffentlichung J.M. Ory et al., "Procédé non conventionnel de localisation d'un mobil ferroviaire - Application et réalisation à la SNCF", ITTG 93, Symposium International sur L'Innovation Technologique dans le Transport Guides, Lille, France 1993, Actes S. 277 wird ein Verfahren zur Positionsbestimmung gleisgeführter Fahrzeuge aus einer Erfassung der Gleislage und des Gleisverschleißprofils beschrieben. Die Sensorik beinhaltet einen speziellen Meßwagen mit drei Drehgestellen und extrem steifem Aufbau, der Schienenniveau sowie Überhöhungen, Spitzen und Variationen des Schienenabstandes erfaßt. Aus dem jeweils gemessenen Schienenprofil wird durch eine Datenkorrelation mit einer entsprechenden, zuvor aufgenommenen Solldatenmenge die Position auf der Strecke abgeleitet, wobei ein vergleichsweise hoher Rechenaufwand erforderlich und die Ortsgenauigkeit auf etwa 10m begrenzt ist.

In der Offenlegungsschrift EP 0 605 848 A1 wird ein Verfahren zur Positionsbestimmung von Eisenbahnzügen unter Einsatz einer Inertialplattform angegeben, bei dem der Fahrzeugort mit a priori Daten durch rekursive Schätzung mittels einer Kalman-Filterung berechnet wird. Zur Stützung der Positionsbestimmung sind zusätzlich Wegemarken entlang der Strecke erforderlich.

Eine Einrichtung zur Bestimmung des Standortes eines spurgeführten Fahrzeugs, das von derartigen Wegemarkierungen entlang der befahrenen Strecke Gebrauch macht, ist auch in der Offenlegungsschrift DE 32 00 811 A1 offenbart.

Aus der Patentschrift US 5.072.396 ist ein Navigationssystem für Flugzeuge bekannt, bei der zur Flugzeugpositionsbestimmung Infrarot-Luftaufnahmen des jeweils überflogenen Gebietes gemacht und die entsprechenden Meßdaten mit Daten eines zuvor aufgenommenen Verzeichnisses der Orte von charakteristischen Objekten in der Landschaft korreliert werden.

Der Erfindung liegt als technisches Problem die Bereitstellung eines Verfahrens und einer Vorrichtung der eingangs genannten Art zugrunde, mit denen eine genaue Positionsbestimmung für spurgeführte Fahrzeuge mit vergleichsweise hoher Fehlertoleranz möglich ist und die auch zur Überwachung der Fahrzeuglänge, z.B. zwecks Zugvollständigkeitskontrolle bei langen Eisenbahnzügen, verwendet werden können.

Dieses Problem wird durch ein Verfahren mit den Merkmalen des Anspruchs 1 und eine Vorrichtung mit den Merkmalen des Anspruchs 5 sowie die Verwendungen gemäß den Ansprüchen 4 und 10 gelöst. Bei diesem Verfahren werden zunächst Positionsmeßdaten auf wenigstens drei voneinander unabhängige Arten mit vergleichsweise wenig Aufwand gewonnen, die dann je für sich mit einer zugehörigen, abgespeicherten Solldatenmenge korreliert, d.h. in Form eines sogenannten "Map-Matching" verglichen werden. Daran schließt sich ein Entscheidungsfindungsschritt an, bei dem die so gewonnenen Positionsresultate untereinander unter Verwendung eines m-von-n-Auswahlverfahrens ausgewertet werden. Diese Vorgehensweise besteht darin, festzustellen, in welchem Positionsintervall mit vorgegebener Auflösungsbreite von z.B. 1m eine vorgegebene Anzahl m der gewonnenen Anzahl n voneinander unabhängiger Positionsresultate liegt. Das betreffende Intervall wird dann als die zu bestimmende Fahrzeugposition gewertet, wobei die übrigen n-m Positionsresultate unberücksichtig bleiben. Damit können Meßfehler einfach und zuverlässig ausgeschlossen werden, was das verfahren fehlertolerant macht und eine signaltechnisch sichere Positionsbestimmung ermöglicht.

Satellitensysteme und streckenseitige Einrichtungen sind bei diesem Verfahren nicht zwingend erforderlich. Vielmehr genügt zur Fahrzeugpositionsbestimmung nach diesem Verfahren bereits die Erfassung von ohnehin entlang der Strecke vorhandenen Objekten, der zurückgelegten Weglänge bzw. damit gleichbedeutend der jeweiligen Fahrgeschwindigkeit und des Streckenverlaufs. Die streckenseitige Anordnung von Transpondern oder sonstiger spezieller Wegemarken ist optional, während die streckenseitig ohnehin vorhandene Struktur zur Erfassung charakteristischer Objekte genutzt wird. Für gleisgeführte Fahrzeuge sind insbesondere Objekte geeignet, die als Bezugspunkte für die Gleislagemessung genutzt werden, wie markierte Vermessungspunkte und Oberleitungsmasten. Aber auch andere landschaftsspezifische Objekte, wie Masten, Brückenelemente, Tunnelportale, Weichenantriebe und dergleichen sind verwendbar.

Zur Durchführung dieses Verfahrens eignet sich die Vorrichtung nach Anspruch 5, die zwingend lediglich fahrzeugseitig angeordnete Elemente in Form einer geeignet ausgelegten Rechnereinheit, den erforderlichen Datenspeichern und geeigneter Sensorik benötigt, wobei letztere mindestens eine Objekterkennungssensoreinheit, eine Weglängenmeßeinheit und eine Drehwinkelmeßeinheit umfaßt. Ein mit diesem Verfahren und dieser Vorrichtung bewirkter wesentlicher Vorteil besteht im geringen infrastrukturellen Aufwand für die Positionsbestimmung und darin, daß kostengünstige handelsübliche Elemente zur Konfiguration eines sicheren, fehlertoleranten Systems eingesetzt werden können. Die bei gegebenem Aufwand hohe Genauigkeit des Systems ermöglicht zudem bei Bedarf eine erhebliche Steigerung des Streckendurchsatzes bei spurgeführten Verkehrssystemem. In Verbindung mit geeigneten Kommunikationssystemen sind außerdem Verbesserungen hinsichtlich Disposition und Logistik in diesen Verkehrssystemem erzielbar.

Bei einem nach Anspruch 2 weitergebildeten Verfahren wird zur Gewinnung einer weiteren Art von Positionsmeßdaten und eines weiteren unabhängigen Positionsresultates die Erfassung spurseitig angeordneter Wegemarken genutzt. Dies kann insbesondere für Anwendungsfälle günstig sein, in denen die streckenseitigen Wegemarken bereits aus anderen Gründen vorhanden sind. Zur Durchführung des Verfahrens nach Anspruch 2 eignet sich speziell eine nach Anspruch 7 weitergebildete Vorrichtung.

Bei einer nach Anspruch 4 vorgesehenen Verwendung des Verfahrens erfolgt eine getrennte Positionsbestimmung für eine vornliegende und eine rückwärtige Stelle des Fahrzeugs, woraus sich durch Differenzbildung der Abstand zwischen diesen beiden Stellen ermitteln läßt. Damit kann zum einen kontinuierlich die Fahrzeuglänge überwacht werden, was insbesondere für die Kontrolle der Vollständigkeit langer Eisenbahnzüge gewünscht sein kann, und zum anderen lassen sich durch eine Bewertung der nacheinander gewonnenen Abstandsresulte die Positionsbestimmungsergebnisse in ihrer Zuverlässigkeit zusätzlich absichern. Für diesen Verwendungszweck eignet sich gemäß Anspruch 10 speziell eine nach Anspruch 9 weitergebildete Vorrichtung.

Zur Erkennung von Objekten entlang der vorgegebenen Spur kann gemäß Anspruch 6 insbesondere mindestens eine Bildkamera oder ein bildgebender Radarsensor jeweils mit nachgeschalteter Verarbeitungseinheit in der verfahrensdurchführenden Vorrichtung vorgesehen sein.

Eine nach Anspruch 8 weitergebildete Vorrichtung beinhaltet ein GPS-Empfangsteil, mit dem zur Erhöhung der Meßgenauigkeit des Systems insbesondere bei Fahrzeugstillstand an Stützpunkten hochgenaue Messungen durchgeführt werden können. Die Daten der übrigen Positionsbestimmungsarten können dann jeweils geeignet aktualisiert bzw. berichtigt werden.

Bevorzugte Ausführungsformen der Erfindung sind in den Zeichnungen dargestellt und werden nachfolgend beschrieben. Hierbei zeigen:
Fig. 1 ein schematisches Blockdiagramm einer ersten Vorrichtung zur Bestimmung der Position eines Eisenbahnfahrzeuges,
Fig. 2 ein schematisches Blockdiagramm einer zweiten Vorrichtung zur Bestimmung der Position eines Eisenbahnfahrzeuges und
Fig. 3 ein schematisches Blockdiagramm einer dritten Vorrichtung zur Bestimmung der Position eines Eisenbahnfahrzeuges.

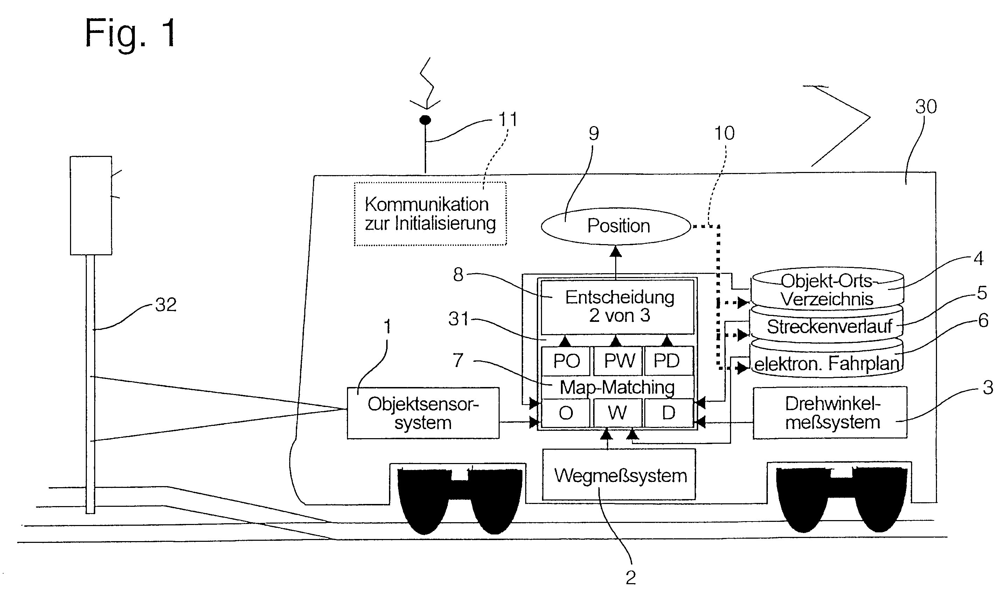

Die in Fig. 1 gezeigte Vorrichtung zur Positionsbestimmung ist mit all ihren benötigten Elementen in einem vornliegenden Zugwagen (30) eines ansonsten nicht näher gezeigten Eisenbahnfahrzeuges untergebracht. Die Vorrichtung beinhaltet als zentrale, verfahrensdurchführende Einheit einen geeigneten Rechner (31). In zugehörigen, vom Rechner (31) auslesbaren Speichern (4, 5, 6) sind erstens Solldaten bezüglich eines Objekt-Ortsverzeichnisses, zweitens Streckenverlaufssolldaten und drittens Solldaten eines elektronischen Fahrplans abgelegt. Korrespondierend mit diesen drei Arten von abgelegten Solldaten umfaßt die Vorrichtung eine Sensorik mit drei Arten von Sensoreinheiten, und zwar einem Objektsensorsystem (1), einem Wegmeßsystem (2) und einem Drehwinkelmeßsystem (3).

Das Objektsensorsystem beinhaltet eine oder mehrere Videobildkameras mit nachgeschalteter Bildverarbeitung oder ein bildgebendes Radarsystem und erfaßt seitlich entlang der Gleisstrecke angeordnete Objekte, im dargestellten Fall beispielsweise einen Signalmast (32), und identifiziert selbige. Die beiden genannten Objektsensorsystemarten sind besonders geeignet, da sie die unterschiedlichen Landschaftsmerkmale aufgrund ihres hochflexiblen Meßprinzips sicher erfassen. Alternativ sind auch andere gängige, akustische, optische, magnetische oder elektromagnetische Sensorsysteme verwendbar, die eine eindeutige Objektidentifikation längs der Gleisstrecke erlauben. Als Wegmeßsystem (2) eignet sich beispielsweise eine Raddrehzahlsensorik, eine Geschwindigkeitsmeßsensorik, die optische oder magnetische Sensoren oder ein Doppler-Radarsystem beinhaltet, oder ein Inertialsensor-Beschleunigungsmeßsystem. Mit dem Wegmeßsystem (2) kann insbesondere zwischen den jeweiligen, vom Objektsensorsystem (1) erkannten Objektpunkten (32) eine direkte oder eine indirekt aus Geschwindigkeitsmessungen abgeleitete Weglängenmessung erfolgen. Als Drehwinkelmeßsystem (3) ist beispielsweise eine die Drehwinkelgeschwindigkeit erfassende Inertialsensorik oder eine Anordnung von Drehwinkelsensoren in einem Drehgestell verwendbar. Das Drehwinkelmeßsystem (3) dient zur Erfassung des Streckenverlaufs bzw. der schnellen Bestimmung der Abbiegerichtung an Verzweigungen.

Die Ausgangssignale der Sensoreinheiten (1, 2, 3) sind dem Rechner (31) zugeführt, der mit diesen Meßdaten und den in den Speichern (4, 5, 6) abgelegten Daten wie folgt eine Positionsbestimmung vornimmt. Die vom Objektsensorsystem (1) zugeführten Objektortdaten (O) werden von einer Map-Matching-Einheit (7) des Rechners (31) mit der aus dem Objekt-Ortsverzeichnisspeicher (4) ausgelesenen Solldatenmenge korreliert, d.h. die betreffenden Daten werden auf bestmögliche Übereinstimmung hin geprüft, was als sogenanntes Map-Matching bezeichnet wird. Ein solcher Datenübereinstimmungsvergleich ist an sich bekannt und bedarf daher hier keiner weiteren Beschreibung, wobei das Map-Matching vom Fachmann jeweils anwendungsbezogen geeignet ausgelegt wird. Aus dieser Datenkorrelation der Objektortdaten (O) ergibt sich ein erstes Positionsresultat (PO). Parallel zur Objektortdatenkorrelation korreliert die Map-Matching-Einheit (7) des Rechners (31) die vom Wegmeßsystem (2) zugeführten Daten über die zurückgelegte Weglänge (W) mit den entsprechenden, im Fahrplanspeicher (6) abgelegten Solldaten und ermittelt daraus ein zweites Positionsresultat (PW). Als dritte parallele Maßnahme werden durch die Map-Matching-Einheit (7) des Rechners (31) die Streckenverlaufsmeßdaten (D) des Drehwinkelmeßsystems (3) mit der entsprechenden, im Streckenverlaufsspeicher (5) abgelegten Solldatenmenge korreliert, woraus ein drittes Positionsresultat (PD) abgeleitet wird. In einer der Map-Matching-Einheit (7) nachgeschalteten Auswerteeinheit (8) unterzieht der Rechner (31) die drei parallel und unabhängig voneinander gewonnenen Positionsresultate (PO, PW, PD) einem 2-von-3-Entscheidungsfindungsprozeß, der darin besteht, festzustellen, innerhalb welches Positionsintervalls mit einer vorgegebenen Auflösungsgrenze von z.B. 1m wenigstens zwei der drei Positionsresultate liegen. Das betreffende Positionsintervall wird dann als die gesuchte Fahrzeugposition (9) bis auf die vorgegebene Auflösungsgrenze genau ausgegeben.

Die solchermaßen ermittelte endgültige Fahrzeugposition (9) wird, wie in Fig. 1 angedeutet, zu den Datenspeichern (4, 5, 6) des Objekt-Ortsverzeichnisses, des Streckenverlaufs und des Fahrplans rückgeführt, wodurch ein rekursives Filter (10) entsteht, das einmalig bei Betriebbeginn über eine geeignete Kommunikationseinrichtung (11) zu initialisieren ist. Durch dieses Rekursionsfilter (10) ist selbst bei Ausfall von zwei der drei positionserfassenden Sensoreinheiten (1, 2, 3) noch eine sichere Erkennung von Fehlern bei der Positionsmessung möglich. Damit ist ein Anhalten des Eisenbahnzuges aus Sicherheitsgründen erst nach einem relativ unwahrscheinlichen Ausfall aller drei voneinander unabhängigen Sensorsysteme (1, 2, 3) erforderlich.

Erkennbar leistet die Vorrichtung von Fig. 1 eine zuverlässige und fehlertolerante Fahrzeugpositionsbestimmung mit relativ geringem Aufwand durch Verwendung gängiger Komponenten und Algorithmen, die in erfindungsspezifischer Weise kombiniert sind. Die Vorrichtung von Fig. 1 eignet sich gleichzeitig auch zur Erzeugung der Solldatenmengen hinsichtlich des Streckenverlaufs und des Objekt-Ortsverzeichnisses, wenn selbige nicht aus existierenden Vermessungsunterlagen verfügbar sind. Bei der Erstellung der jeweiligen Solldatenmenge ist eine Aufbereitung der Meßdaten durch den Rechner (31) mit geeigneten, herkömmlichen Ausgleichungsverfahren empfehlenswert. Während für den das 2-von-3-Entscheidungsfindungsverfahren durchführenden Rechnerteil (8) ein sicheres Rechnersystemteil erforderlich ist, brauchen die Map-Matching-Einheit (7) des Rechners (31) sowie der nicht näher gezeigte Rechnerteil zur Erstellung der Solldatenmengen für den Objekt-Ortsverzeichnisspeicher (4) und den Streckenverlaufsspeicher (5) keine derartigen sicheren Systemteile zu sein.

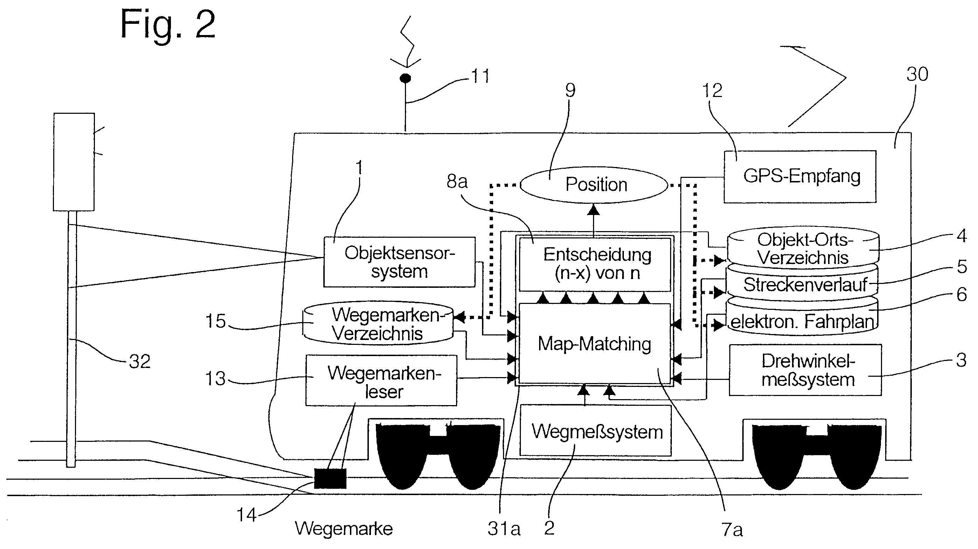

Bei Bedarf kann zur Erhöhung der Meßgenauigkeit ein GPS-Empfangstell integriert werden, mit dem insbesondere bei Fahrzeugstillstand an Stützpunkten hochgenaue Positionsmessungen, insbesondere auch zur Erstellung der Solldatenmengen bezüglich des Objekt-Ortsverzeichnisses (4) und des Streckenverlaufs (5) durchgeführt werden können. Eine solche Vorrichtung, die zusätzlich zu den in Fig. 1 gezeigten Komponenten ein GPS-Empfangsteil (12) enthält, ist in Fig. 2 dargestellt, wobei funktionsgleiche Komponenten mit gleichen Bezugszeichen versehen sind. Hinsichtlich der Beschreibung von Aufbau und Funktionsbauweise der gemeinsamen Komponenten kann auf die obigen Ausführungen im Zusammenhang mit Fig. 1 verwiesen werden. Die Vorrichtung von Fig. 2 verfügt darüber hinaus über eine vierte Positionsbestimmungsart mittels Erkennen streckenseitig angeordneter Wegemarken (14). Zum Detektieren der Wegemarken (14) dient ein entsprechendes Wegemarkenlesegerät (13) und die zugehörige Wegemarken-Solldatenmenge ist in einem Wegemarkenverzeichnisspeicher (15) abgelegt. Der gegenüber demjenigen von Fig. 1 geeignet modifizierte Rechner (31a) führt zur Positionsbestimmung neben den von der Vorrichtung gemäß Fig. 1 durchgeführten drei parallelen Datenkorrelationen in seiner Map-Matching-Einheit (7a) eine vierte Datenkorrelation durch, bei der die vom Wegemarkenlesegerät (13) empfangenen Daten auf bestmögliche Übereinstimmung mit den aus dem Wegemarkenverzeichnisspeicher (15) ausgelesenen Wegemarkensolldaten verglichen werden. Der Map-Matching-Einheit (7a) wird außerdem das Ausgangssignal das GPS-Empfangsteils (12) zugeführt. Je nach Aufwand/Nutzen-Relation im gegebenen Anwendungsfall können auch noch weitere Positionsbestimmungsarten zur Gewinnung weiterer vorläufiger Positionsresultate durch Map-Matching vorgesehen sein.

Alle von der Map-Matching-Einheit (7a) ermittelten Positionsresultate werden dann einer Auswerteeinheit (8a) des Rechners (31a) zugeführt, die aus der Anzahl n zugeführter Positionsresultate eine (n-x)-von-n-Entscheidung trifft, wobei x die Anzahl der nicht für die Auswertung herangezogenen Positionsresultate angibt, d.h. die Auswertung erfolgt auf der Basis einer Anzahl m=n-x der insgesamt n Positionsresultate. Die Auswertung kann wiederum, wie zu Fig. 1 beschrieben, darin bestehen, eine Auflösungsgrenze von z.B. 1m vorzugeben und festzustellen, in welchem Positionsintervall dieser Länge mindestens eine Anzahl m der n unabhängig gewonnenen Positionsresultate liegt. Damit ist dann die gesuchte Position bis auf die vorgegebene Auflösungsgrenze gefunden und wird von der Auswerteeinheit (8a) zur Ausgabe (9) gebracht. Die ausgegebenen Positionsdaten (9) werden wiederum, wie gestrichelt angedeutet, unter Bildung eines Rekursionsfilters (10) zu den vorhandenen Datenspeichern (4 bis 6, 15), hier auch in den Wegemarkenverzeichnisspeicher (15), rückgeführt. Soweit oben nichts anderes gesagt, ergeben sich für die Vorrichtung von Fig. 2 die gleiche Funktionsweise und die gleichen Eigenschaften und Vorteile wie zur Vorrichtung von Fig. 1 beschrieben, worauf verwiesen werden kann.

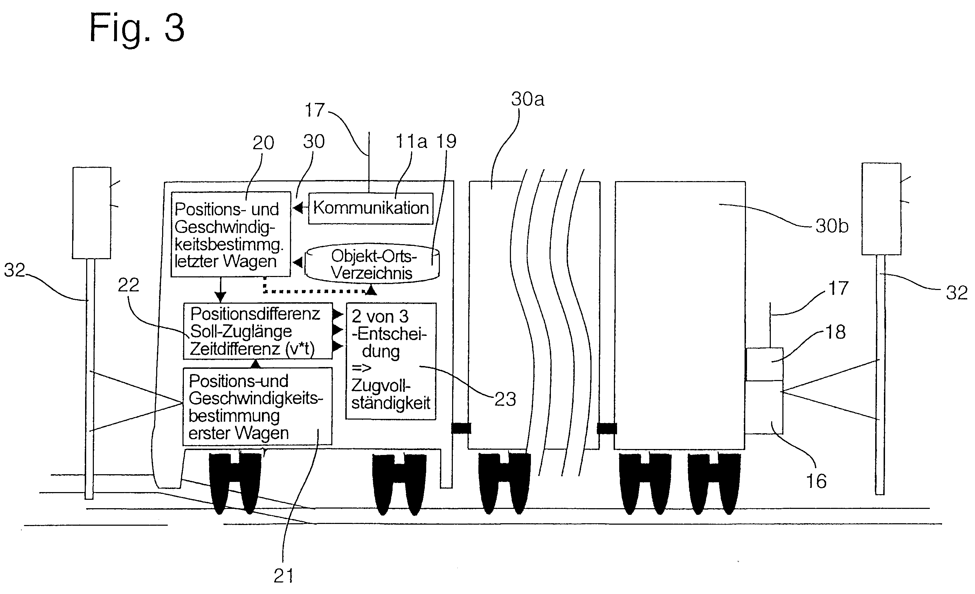

Eine gegenüber denjenigen der Figuren 1 und 2 erweiterte Positionsbestimmungsvorrichtung ist in Fig. 3 gezeigt. Die Vorrichtung in Fig. 3 beinhaltet zunächst im vornliegenden Zugwagen (30) eines vielgliedrigen Eisenbahnzuges, der hinter dem vordersten Zugwagen eine Mehrzahl weiterer Zugwagen (30a) bis zu einem letzten Zugwagen (30b) beinhaltet, eine Vorrichtung gemäß Fig. 1 oder Fig. 2, mit der eine Positionsbestimmung des vorderen Zugwagens (30), wie oben beschrieben, durchgeführt wird. Der entsprechende Vorrichtungsteil ist in Fig. 3 insgesamt durch einen Funktionsblock (21) repräsentiert, der natürlich auch das Objektsensorsystem zur Erfassung markanter Objekte, wie z.B. die dargestellten Signalmasten (32), umfaßt. Darüber hinaus ist die Vorrichtung von Fig. 3 zur kontinuierlichen Prüfung auf Zugvollständigkeit eingerichtet.

Hierzu ist am letzten Wagen (30b) eine zweite Objekterkennungssensoreinheit (16) in Form eines auf der Basis von optischen Strahlen oder Radarstrahlen arbeitenden Bilderfassungs- und Bildverarbeitungssystems angebracht. Über eine angekoppelte Kommunikationseinheit (18) werden die zugehörigen Positionsmeßdaten der Objekterkennungssensoreinheit (16) des letzten Wagens (30b) über eine drahtlose Kommunikationsstrecke (17) zu einer entsprechenden, im vordersten Zugwagen (30) angebrachten Kommunikationseinheit (11a) übermittelt. Die Kommunikationseinheit (11a) gibt die empfangenen Daten an eine Positionsbestimmungseinheit (20) weiter, die in Aufbau und Funktionsweise wiederum im wesentlichen einer der Vorrichtungen nach Fig. 1 oder 2 entspricht und durch Korrelation der empfangenen Daten mit der entsprechenden Solldatenmenge aus einem zugehörigen Objekts-Ortsverzeichnisspeicher (19) die Position des letzten Wagens (30b) in gleicher Weise bestimmt, wie dies die entsprechende Positionsbestimmungseinheit (21) für den ersten Wagen (30) vornimmt.

Wie in Fig. 3 angedeutet, kann bei Bedarf zur Vereinfachung wenigstens eine der beiden Positionsbestimmungen auf die Gewinnung nur eines einzigen Positionsresultates durch Korrelation der von der jeweiligen Objekterkennungssensoreinheit aufgenommenen Daten mit der im Objekt-Ortsverzeichnisspeicher (19) abgelegten Solldatenmenge beschränkt werden. Denn bei dieser Vorrichtung ist eine zusätzliche Funktionssicherheit und damit Fehlertoleranz dadurch gegeben, daß die Richtigkeit der Positionsbestimmung durch den Vergleich der für den letzten Wagen (30b) erhaltenen Resultate mit denjenigen, die für den ersten Wagen (30) erhalten werden, abgesichert werden kann. In einer den Positionsbestimmungseinheiten (21, 22) nachgeschalteten Einheit (22) wird durch Bildung der Differenz der zu einem jeweiligen Zeitpunkt ermittelten Positionen des ersten (30) und des letzten Wagens (30b) unmittelbar der Abstand der beiden Wagen (30, 30b) und damit die Zuglänge bestimmt. Des weiteren bildet diese Einheit (22) die Zeitdifferenz zwischen einer Erfassung desselben Objektes (32) zum einen durch die Objekterkennungssensoreinheit des ersten Wagens (30) und zum anderen durch diejenige des letzten Wagens (30b) und multipliziert sie mit der mittleren Zuggeschwindigkeit in diesem Zeitintervall, wodurch die Übereinstimmung der beiden Meßresultate überprüft und Meßfehler sicher erkannt werden können. In einer weiteren nachgeschalteten Einheit (23) wird eine 2-von-3-Entscheidungsfindung durchgeführt, bei der die Positionsdifferenzdaten bzw. die Daten bezüglich der mit der Zuggeschwindigkeit multiplizierten Zeitdifferenz mit Daten über die Soll-Zuglänge verglichen werden, die vorab abgespeichert oder aus Messungen über einen längeren Zeitraum hinweg ermittelt wurden. Dies ermöglicht eine kontinuierliche Überwachung der Zugvollständigkeit. Ein Vergleich der aus den Positionsdaten abgeleiteten Geschwindigkeiten für den ersten (30) sowie für den letzten Wagen (30b) sichert die Meßergebnisse zusätzlich ab.

Es versteht sich, daß die Vorrichtung von Fig. 3 im übrigen je nach Ausstattung sämtliche Funktionen zu erfüllen vermag, die oben zu den Vorrichtungen der Figuren 1 und 2 erläutert wurden. Weiter versteht sich, daß die beschriebenen Vorrichtungen, indem sie in einem entsprechenden Meßfahrzeug installiert werden, auch zur Bestimmung der Position von beliebigen Objekten längs der Strecke einer vorgegebenen Fahrspur verwendbar sind, wozu das Meßfahrzeug dann die betreffende Strecke abfährt.

## Patentansprüche

1. Verfahren zur Bestimmung der Position wenigstens einer Stelle eines sich aus einer vorgegebenen Spur bewegenden Fahrzeugs, bei dem
- unabhängig voneinander wenigstens eine Anzahl n verschiedener Arten von Positionsmeßdaten (O, W, D), mit n größer oder gleich drei, durch Erfassen von entlang der Spur vorhandenen Objekten, der zurückgelegten Weglänge und des befahrenen Streckenverlaufs gewonnen werden,
- für jede Art erfaßter Meßdaten ein Positionsresultat (PO, PW, PD) durch eine jeweilige Korrelation der erfaßten Meßdaten mit einer zugehörigen, abgelegten Solldatenmenge ermittelt wird und
- die Fahrzeugposition (9) aus den ermittelten Positionsresultaten durch ein m-von-n-Entscheidungsfindungsverfahren bestimmt wird, das die Feststellung einer vorgegebenen Anzahl m (z.B. 2) aus der Anzahl n unabhängig ermittelter, innerhalb eines Intervalls mit vorgegebener Auflösungsbreite liegender Positionsresultate zur Auswertung beinhaltet, wobei das betreffende Intervall als die zu bestimmende Position gewertet wird.

2. Verfahren nach Anspruch 1, weiter
**dadurch gekennzeichnet, daß**
als eine Art von Positionsmeßdaten solche verwendet werden, die aus einer Erfassung von entlang der Spur angeordneten Wegemarken gewonnen werden.

3. Verfahren nach Anspruch 1 oder 2, weiter
**dadurch gekennzeichnet, daß**
die Daten der jeweils bestimmten Fahrzeugposition (9) rekursiv (10) zu den abgelegten Solldatenmengen rückgeführt werden.

4. Verwendung des Verfahrens nach einem der Ansprüche 1 bis 3 zur Ermittlung des Abstands zwischen einer vorderen Stelle (30) und einer hinteren Stelle (30b) eines Fahrzeugs, indem Positionsbestimmungen gemäß des Verfahrens nach einem der Ansprüche 1 bis 3 unabhängig voneinander für die vordere Stelle (30) und die hintere Stelle (30b) des Fahrzeugs durchgeführt werden und daraus mittels Differenzbildung der beiden Positionsresultate der Abstand zwischen diesen beiden Stellen des Fahrzeugs ermittelt wird.

5. Vorrichtung zur Bestimmung der Position wenigstens einer Stelle eines sich auf einer vorgegebenen Spur bewegenden Fahrzeugs, bei der zur Durchführung der Positionsbestimmung für die wenigstens eine Stelle des Fahrzeugs gemäß dem Verfahren nach Anspruch 1 folgende fahrzeugseitig angeordnete Elemente vorgesehen sind:
- eine Rechnereinheit (31) zur Durchführung der Datenkorrelationen sowie des m-von-n-Entscheidungsfindungsverfahrens,
- von der Rechnereinheit auslesbare Speicher (4, 5, 6), in denen die Solldatenmengen abgelegt sind, und
- eine Sensorik zur Gewinnung der Positionsmeßdaten (O, W, D), welche mindestens eine Objekterkennungs-Sensoreinheit (1) zur Gewinnung von Objektortdaten (O), eine Weglängenmeßeinheit (2) zur Gewinnung von Weglängendaten (W) und eine Drehwinkelmeßeinheit (3) zur Gewinnung von Streckenverlaufsdaten (D) umfaßt.

6. Vorrichtung nach Anspruch 5, weiter
**dadurch gekennzeichnet, daß**
die Objekterkennungs-Sensoreinheit (1) eine Bildkamera mit nachgeschalteter Bildverarbeitung oder einen bildgebenden Radarsensor mit nachgeschalteter Signalverarbeitung beinhaltet.

7. Vorrichtung nach Anspruch 5 oder 6,
**dadurch gekennzeichnet, daß**
- die Sensorik zur Gewinnung der Positionsmeßdaten ein Wegemarkenlesegerät (13) umfaßt und
- eine zugehörige Wegemarken-Solldatenmenge in einem von der Rechnereinheit (31a) auslesbaren Wegemarkenverzeichnisspeicher (15) abgelegt ist.

8. Vorrichtung nach einem der Ansprüche 5 bis 7, weiter
**gekennzeichnet durch**
ein GPS-Empfangsteil (12), dessen Ausgangssignal der Rechnereinheit (31a) zuführbar ist.

9. Vorrichtung nach einem der Ansprüche 5 bis 8, weiter
**dadurch gekennzeichnet, daß**
sie zur Bestimmung der Positionen einer ersten, vorderen oder hinteren Stelle (30) und einer entgegengesetzten zweiten, hinteren bzw. vorderen Stelle (30b) des Fahrzeugs eingerichtet ist, indem
- Rechnereinheit, Datenspeicher und Sensorik an einer ersten, vorderen oder hinteren Stelle (30) des Fahrzeugs angeordet sind,
- an einer entgegengesetzten zweiten, hinteren bzw. vorderen Stelle (30b) des Fahrzeugs wenigstens eine Sensoreinheit (16) vorgesehen ist, die einer der an der ersten Stelle angeordneten Sensoreinheiten entspricht,
- eine Kommunikationseinrichtung (11a, 17, 18) zur Übermittlung der von der Sensoreinheit (16), die an der zweiten Stelle positioniert ist, gewonnenen Positionsmeßdaten an die an der ersten Stelle untergebrachte Rechnereinheit vorgesehen ist und
- die Rechnereinheit (20, 21, 22, 23) neben der Position der ersten Stelle (30) des Fahrzeugs zusätzlich durch Datenkorrelation der übermittelten Positionsmeßdaten mit der zugehörigen Solldatenmenge die Position der zweiten Stelle (30b) des Fahrzeugs ermittelt.

10. Verwendung einer Vorrichtung nach Anspruch 9 zur Ermittlung des Abstands zwischen einer vorderen Stelle (30) und einer hinteren Stelle (30b) eines Fahrzeugs, indem mit der Vorrichtung nach Anspruch 9 die Positionen der vorderen (30) und der hinteren Stelle (30b) des Fahrzeugs bestimmt werden und daraus mittels einer von der Rechnereinheit (20, 21, 22, 23) der Vorrichtung nach Anspruch 9 durchgeführten Differenzbildung der Abstand zwischen den beiden Stellen (30, 30b) ermittelt wird.
